# EUROPEAN PATENT SPECIFICATION

(11) **EP 4 306 358 B1**
(45) Date of publication and mention of the grant of the patent: **24.12.2025**
(21) Application number: 23184357.4
(22) Date of filing: 10.07.2023
(51) Int. Cl.: B60N 2/28

(54) **BACK REINFORCEMENT STRUCTURE OF SAFETY SEAT AND SAFETY SEAT**
RÜCKENVERSTÄRKUNGSSTRUKTUR FÜR EINEN SICHERHEITSSITZ UND SICHERHEITSSITZ
STRUCTURE DE RENFORT DE DOSSIER DE SIÈGE DE SÉCURITÉ ET SIÈGE DE SÉCURITÉ

(30) Priority: 15.07.2022 CN 202221839464 U
(43) Date of publication of application: 17.01.2024
(73) Proprietor: Ningbo Baby First Baby Products Co., Ltd., Ningbo, Zhejiang 315412 (CN)
(72) Inventor: JI, Xuewei, Zhejiang, 315412 (CN); LIU, Jianchun, Zhejiang, 315412 (CN); JIANG, Chunling, Zhejiang, 315412 (CN)
(74) Representative: Santarelli

(56) References cited:
- CN-A- 114 162 006
- US-A- 4 762 364
- US-A1- 2009 072 600

## Description

### Technical Field

The present invention relates to the field of safety seats, in particular to a back reinforcement structure of a safety seat and the safety seat.

### Background Art

At present, a vehicle is usually equipped with a car child safety seat for guaranteeing safety of a child in a vehicle. The seat can protect the child by effectively reducing personal injury to the child in the case of an accident. The safety seat usually includes a base and a back rotatable relative to the base. The base is provided with a rotary plate for being connected to the back. By rotating the back, forward and reverse mounting of the safety seat can be implemented.

However, an existing safety seat has the following defects. Specifically, a mounting structure between the back and the rotary plate is complex, and in the process of assembling the back to the base, several long round steel bars are required to run through numerous parts from a side surface, resulting in high production and processing costs of the safety seat due to difficult hole alignment and penetration. In addition, the back has a low structural strength, and is likely to deform after use of the child safety seat for a long time, posing certain safety risks for the child in the vehicle.

Patent document US4 762 364 A discloses a reclinable and rotatable child restraint car seat for a child which can be adjusted into various configurations according to the needs and desires of the operator.

Patent document US2009/072600A1 discloses a child seat for transporting a child in a car comprising a seat support with a support bottom and a support back which extends above the support bottom, a seat frame that has harness belts for holding the child against the seat frame, and slides between the seat support and the seat frame for coupling the seat frame in adjustable tilt positions to the seat support, which slides comprise an upper slide for connecting the upper or shoulder part of the seat frame to the support back and a lower slide for connecting the lower or bottom part of the seat frame to the support bottom.

Patent document CN 114 162 006A discloses a full-group child seat compact in structure.

### Summary

The present invention is set out in the appended set of claims.

A first objective of the present invention is to provide a back reinforcement structure of a safety seat, which can increase the strength of a back, and has a simple structure and low production and assembly costs.

A second objective of the present invention is to provide a safety seat using the back reinforcement structure of a safety seat.

In order to achieve one of the objectives of the present invention, a technical solution used by the present invention is as follows:
the back reinforcement structure of a safety seat includes: a back, a rotary plate, a reinforcement member and a connector, where the back is provided with a first connection portion, the rotary plate is connected to the first connection portion through the connector, the reinforcement member is arranged in the back, and the reinforcement member is connected to the first connection portion.

Preferably, the connector sequentially penetrates the reinforcement member, the first connection portion and the rotary plate to connect the reinforcement member, the back and the rotary plate to one another.

Preferably, the back includes a hip support area and a back support area; the reinforcement member includes a first reinforcement portion connected to the first connection portion, and a second reinforcement portion and a third reinforcement portion that extend from two ends of the first reinforcement portion; the first reinforcement portion and the third reinforcement portion are located in the hip support area; and the second reinforcement portion is located in the back support area.

Further, the first reinforcement portion sinks towards the rotary plate, the first connection portion is suitable for accommodating the first reinforcement portion, and the two ends of the first reinforcement portion are both connected to the first connection portion.

Further, the rotary plate is provided with a connection recess, the connection recess protrudes towards the first connection portion, and the connection recess is suitable for accommodating an end of the connector.

Preferably, the reinforcement member includes a first plate adapted to be inserted into the back and a second plate extending from a side of the first plate, and the second plate is adapted to connect to the first connection portion.

Further, a left side and a right side of the back are provided with mounting recesses respectively for mounting the reinforcement members, and a pair of reinforcement members are arranged and are symmetrically mounted in the mounting recesses.

Further, each first plate is provided with two second plates, the reinforcement member is provided with four second plates in total, and each second plate is adapted to connect to two connectors.

Preferably, the reinforcement member is sheet iron, and the connector includes a bolt and a nut.

In order to achieve the second objective of the present application, a technical solution used by the present invention is as follows:
a safety seat uses the back reinforcement structure above.

Compared with the prior art, the present invention has the following beneficial effects: an interior of the back is connected to the reinforcement member, the back is also connected to the rotary plate, the reinforcement member is built in the back, and the reinforcement member forms an integrated stress structure with the back and the rotary plate, such that a desirable overall strength of the back is achieved.

### Brief Description of the Drawings

FIG. 1 is a schematic diagram of a back reinforcement structure of a safety seat according to a preferred embodiment of the present invention;
FIG. 2 is a partial enlarged view of FIG. 1;
FIG. 3 is a schematic structural diagram of a back according to a preferred embodiment of the present invention;
FIG. 4 is a schematic structural diagram of a rotary plate according to a preferred embodiment of the present invention;
FIG. 5 is a schematic structural diagram of a rotary plate according to a preferred embodiment of the present application from another perspective;
FIG. 6 is a schematic structural diagram of a reinforcement member according to a preferred embodiment of the present invention;
FIG. 7 is a schematic structural diagram of a reinforcement member according to a preferred embodiment of the present application from another perspective;
FIG. 8 is a schematic structural diagram showing a connection between a back and a reinforcement member according to a preferred embodiment of the present invention;
FIG. 9 is another schematic structural diagram showing a connection between a back and a reinforcement member according to a preferred embodiment of the present invention; and
FIG. 10 is a schematic diagram showing an assembly process of a back and a rotary plate according to a preferred embodiment of the present invention.

In the figures: 10. Back; 11. Hip support area; 12. Back support area; 111. First connection portion; 13. Mounting recess; 20. Rotary plate; 211. Connection recess; 30. Reinforcement member; 31. First reinforcement portion; 310. First plate; 311. Second plate; 312. First end; 313. Second end; 32. Second reinforcement portion; 33. Third reinforcement portion; 40. Connector.

### Detailed Description of Embodiments

The present invention will be further described below in conjunction with specific embodiments. It should be noted that, on the premise of no conflict, embodiments or technical features described below can be arbitrarily combined to form a new embodiment.

In the description of the present invention, it should be noted that an orientation or positional relationship indicated by an orientation term such as "center", "lateral", "longitudinal", "length", "width", "thickness", "upper", "lower", "front", "rear", "left", "right", "vertical", "horizontal", "top", "bottom", "inner", "outer", "clockwise" or "counterclockwise" is based on an orientation or positional relationship shown in accompanying drawings, is merely used for facilitating the description of the present application and simplifying the description, rather than indicating or implying that a device or element referred to should have a specific orientation or be constructed and operated in a specific orientation, and should not be construed as limiting the scope of protection of the present invention.

It should be noted that a term such as "first" or "second" in the description and the claims of the present invention is used to distinguish similar objects, rather than to describe a specific sequence or order.

The terms such as "include/comprise" and "have" and any variations thereof in the description and the claims of the present invention are intended to cover non-exclusive inclusions, for example, processes, methods, systems, products, or devices that include a series of steps or units are not necessarily limited to those explicitly listed steps or units, but can include other steps or units not explicitly listed or inherent to the processes, methods, products, or devices.

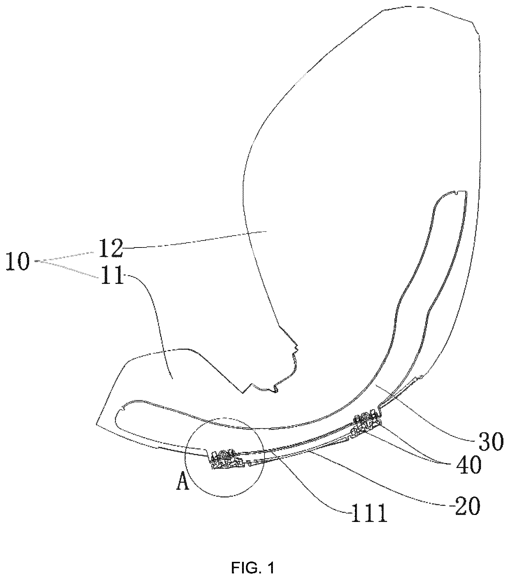

As shown in FIGS. 1-10, the present invention may provide a back reinforcement structure of a safety seat. The back reinforcement structure of a safety seat includes: a back 10, a rotary plate 20, a reinforcement member 30 and a connector 40, where the back 10 is provided with a first connection portion 111, the rotary plate 20 is connected to the first connection portion 111 through the connector 40, the reinforcement member 30 is arranged in the back 10, and the reinforcement member 30 is connected to the first connection portion 111.

The reinforcement member 30 is arranged in the back 10, the first connection portion 111 is connected to the reinforcement member 30 and the rotary plate 20, and the back 10, the rotary plate 20 and the reinforcement member 30 form an integrated stress structure, such that the strength of the back 10 can be enhanced.

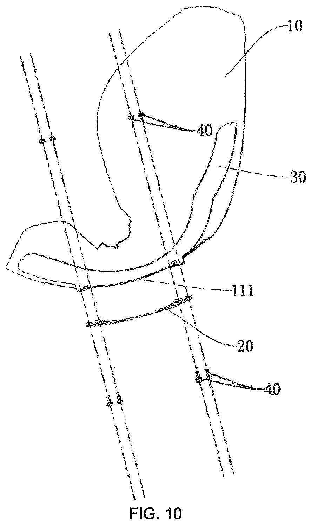

Preferably, as shown in FIGS. 1 and 10, the reinforcement member 30 is connected to the first connection portion 111 through the connector 40; and the connector 40 sequentially penetrates the first reinforcement portion 31, the first connection portion 111 and the rotary plate 20 to connect the reinforcement member 30, the back 10 and the rotary plate 20 to one another.

More particularly, the connector 40 includes a bolt and a nut, the reinforcement member 30 may be sheet iron, and the sheet iron has high hardness. Compared with an existing connection structure between the back 10 and the rotary plate 20, such as a sliding connection between the back 10 and the rotary plate 20, a connection structure of the present disclosure is simpler and production and assembly costs are lower.

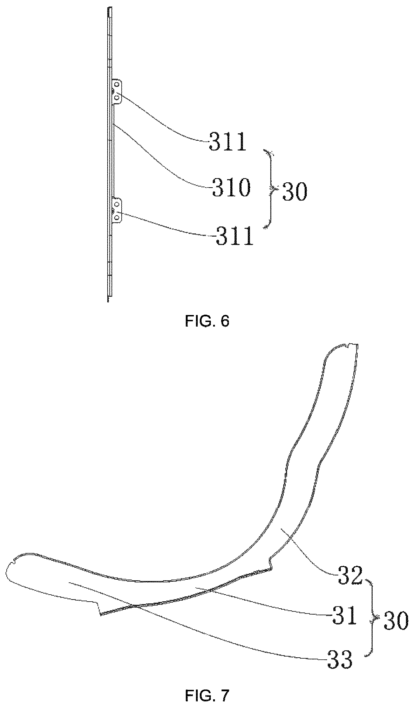

Preferably, as shown in FIGS. 1 and 7, the back 10 includes a hip support area 11 and a back support area 12, the reinforcement member 30 includes a first reinforcement portion 31 connected to the first connection portion 111, and a second reinforcement portion 32 and a third reinforcement portion 33 that extend from two ends of the first reinforcement portion 31; the first reinforcement portion 31 and the third reinforcement portion 33 are located in the hip support area 11; and the second reinforcement portion 32 is located in the back support area 12.

The third reinforcement portion 33 and the first reinforcement portion 31 both enhance the strength of the hip support area 11, the second reinforcement portion 32 enhances the strength of the back support area 12, and the second reinforcement portion 32 and the third reinforcement portion 33 are located at two ends of the first reinforcement portion 31 respectively. When a child sits in the safety seat, the second reinforcement portion 32 and the third reinforcement portion 33 are simultaneously stressed and then transmit a pressure to the first reinforcement portion 31 from two ends respectively, such that the first reinforcement portion 31 can be uniformly stressed, and the second reinforcement portion 32 is prevented from driving the whole reinforcement member 30 to move backwards after the second reinforcement portion is stressed.

The hip support area 11 and the back support area 12 may be integrally formed; and the first reinforcement portion 31, the second reinforcement portion 32 and the third reinforcement portion 33 are integrally formed, such that an integrally formed structure has a high structural strength.

The back support area 12 has a certain curvature in a vertical direction, and the reinforcement member 30 is bent into an arc along a shape of the back support area 12.

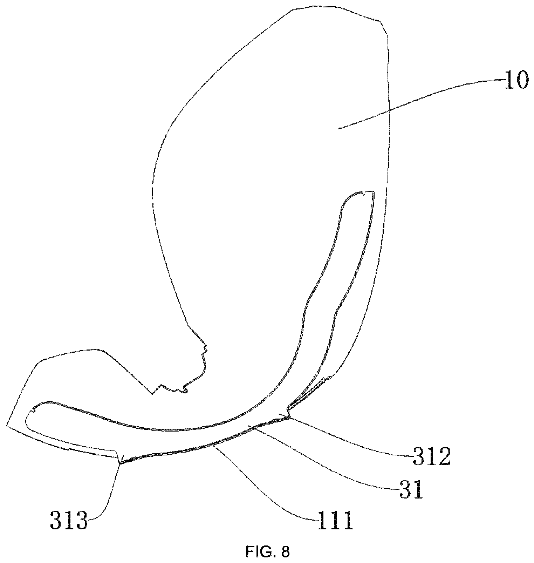

Preferably, as shown in FIGS. 1 and 8, the first reinforcement portion 31 sinks towards the rotary plate 20, the first connection portion 111 is suitable for accommodating the first reinforcement portion 31, and the two ends of the first reinforcement portion 31 are both connected to the first connection portion 111.

Specifically, the first reinforcement portion 31 extends by a certain distance in a front-back direction of the back 10. A first end 312 and a second end 313 of the first reinforcement portion 31 sink towards the rotary plate 20 separately and are connected to the first connection portion 111. A plurality of connection points are provided between the reinforcement member 30 and the first connection portion 111, thereby achieving a stable connection structure.

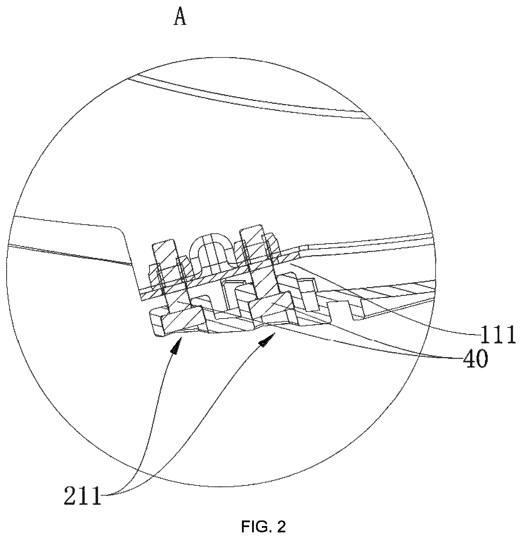

As shown in FIG. 2, the rotary plate 20 is provided with a connection recess 211, the connection recess 211 protrudes towards the first connection portion 111, and the connection recess 211 is suitable for accommodating an end of the connector 40. The end of the connector 40 can be effectively prevented from interfering with the rotation of the rotary plate 20.

For example, when the connector 40 is the bolt, the bolt may be mounted from bottom to top. A threaded section of the bolt sequentially penetrates the rotary plate 20, the reinforcement member 30 and the first connection portion **111,** and a lower end of the bolt is accommodated in the connection recess 211, such that the bolt is unlikely to interfere with the rotation of the rotary plate 20 relative to the base, and an upper end of the bolt is tightened with the nut.

Preferably, as shown in FIG. 6 and FIGS. 8-9, the reinforcement member 30 includes a first plate 310 adapted to be inserted into the back 10 and a second plate 311 extending from a side of the first plate 310, and the second plate 311 is adapted to connect to the first connection portion 111.

The second plate 311 is arranged such that a connection between the reinforcement member 30 and the first connection portion **111** is easier and more convenient, and the first plate 310 can provide support for parts inside the back 10 or an upper surface of the back 10, so as to enhance the strength of the back 10.

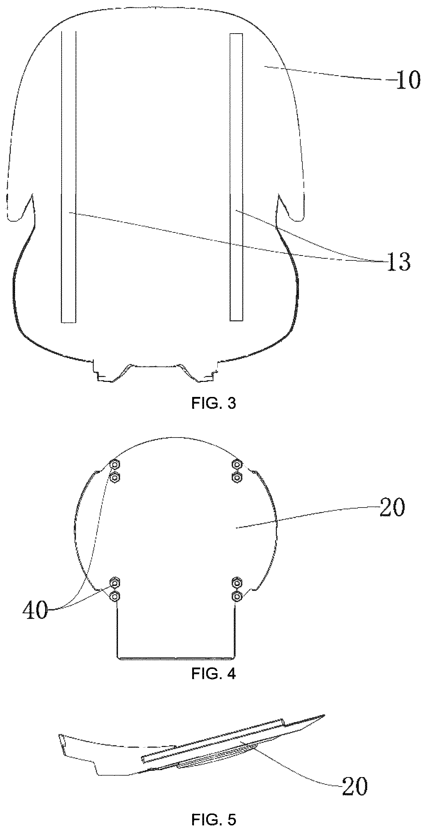

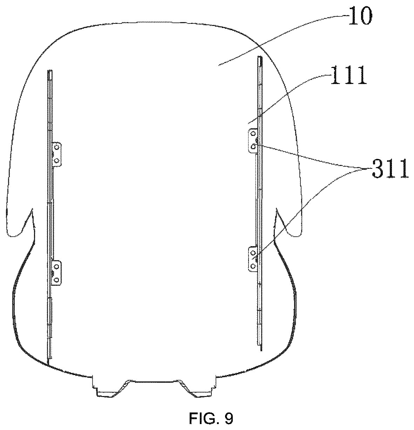

Further, as shown in FIGS. 3 and 9, a left side and a right side of the back 10 are provided with mounting recesses 13 respectively for mounting the reinforcement members 30, and a pair of reinforcement members 30 are arranged and are symmetrically mounted in the mounting recesses 13.

More specifically, the mounting recess 13 penetrates in the front-back direction of the back 10, and the reinforcement member 30 is adapted to be directly inserted into the mounting recess 13, such that the reinforcement member 30 is convenient to assemble.

A reinforcement effect on the strength of the back 10 is limited by arranging a single reinforcement member 30, and since a child is active, the child will not always sit in a center of the safety seat. If the single reinforcement member 30 is arranged on a centerline of the safety seat, uneven stressing is still caused, and the reinforcement member 30 will be deformed or displaced. If too many reinforcement members 30 are arranged, the production cost can be increased, and more mounting holes are required. Excessive opening will reduce the structural strength of the back 10 and the rotary plate 20. According to the present application, a pair of reinforcement members 30 are symmetrically arranged on a left side and a right side of the back 10, such that a pressure of the back 10 or the rotary plate 20 on the reinforcement members 30 is evenly divided into two parts, thereby improving stability of the connection structure, and effectively enhancing the strength of the back 10.

Further, other structures (for example, a long transverse shaft that may be inserted) may be arranged between the first plates 310 of the two reinforcement members 30, so as to further increase the strength of the back 10.

Further, each first plate 310 is provided with two second plates 311, the reinforcement member 30 is provided with four second plates 311 in total, and each second plate 311 is adapted to connect to two connectors 40. The connection structure is more stable and firm, and can effectively prevent loosening at a connection place.

Correspondingly, as shown in FIGS. 4-5, the rotary plate 20 includes a plate surface with a substantially circular shape, and a pair of connectors 40 are mounted at each of four corners of the plate surface.

A central area of the rotary plate 20 is relatively complete, and a structural strength of the rotary plate 20 is desirable.

The present application may further provide a safety seat using the back reinforcement structure above. Since the rotary plate 20 is fixedly connected to the back 10 and the reinforcement member 30 is arranged in the back 10, the safety seat has a high structural strength and is more durable.

The scope of protection of the present application is defined by the appended claims and their equivalents.

## Claims

1. A back reinforcement structure for a safety seat, the back reinforcement structure comprising:
a back (10), a rotary plate (20), a reinforcement member (30), and a connector (40), wherein the back (10) is provided with a first connection portion (111), the rotary plate (20) is connected to the first connection portion (111) through the connector (40), the reinforcement member (30) is arranged in the back (10), and the reinforcement member (30) is connected to the first connection portion (111);
**characterized in that** the connector (40) sequentially penetrates the reinforcement member (30), the first connection portion (111), and the rotary plate (20) to connect the reinforcement member (30), the back (10), and the rotary plate (20) to one another.

2. The back reinforcement structure for a safety seat according to claim 1, **characterized in that** the back (10) comprises a hip support area (11) and a back support area (12); the reinforcement member (30) comprises a first reinforcement portion (31) connected to the first connection portion (111), and a second reinforcement portion (32) and a third reinforcement portion (33) that extend from two ends of the first reinforcement portion (31); the first reinforcement portion (31) and the third reinforcement portion (33) are located in the hip support area (11); and the second reinforcement portion (32) is located in the back support area (12).

3. The back reinforcement structure for a safety seat according to claim 2, **characterized in that** the first reinforcement portion (31) sinks towards the rotary plate (20), the first connection portion (111) is suitable for accommodating the first reinforcement portion (31), and the two ends of the first reinforcement portion (31) are both connected to the first connection portion (111).

4. The back reinforcement structure for a safety seat according to claim 1 or 3, **characterized in that** the rotary plate (20) is provided with a connection recess (211), the connection recess (211) protrudes towards the first connection portion (111), and the connection recess (211) is suitable for accommodating an end of the connector (40).

5. The back reinforcement structure for a safety seat according to claim 1, **characterized in that** the reinforcement member (30) comprises a first plate (310) adapted to be inserted into the back (10) and a second plate (311) extending from a side of the first plate (310), and the second plate (311) is adapted to connect to the first connection portion (111).

6. The back reinforcement structure for a safety seat according to claim 5, **characterized in that** a left side and a right side of the back (10) are provided with mounting recesses (13) respectively for mounting the reinforcement members (30), and a pair of reinforcement members (30) are arranged and are symmetrically mounted in the mounting recesses (13).

7. The back reinforcement structure for a safety seat according to claim 6, **characterized in that** each first plate (310) is provided with two second plates (311), the reinforcement member (30) is provided with four second plates (311) in total, and each second plate (311) is adapted to connect to two connectors (40).

8. The back reinforcement structure for a safety seat according to claim 1, **characterized in that** the reinforcement member (30) is sheet iron, and the connector (40) comprises a bolt and a nut.

9. A safety seat, **characterized in that** the back reinforcement structure for a safety seat according to any one of claims 1-8 is used.

## Patentansprüche

1. Rückenlehnenverstärkungsstruktur für einen Sicherheitssitz, wobei die Rückenlehnenverstärkungsstruktur umfasst: eine Rückenlehne (10), eine Drehplatte (20), ein Verstärkungselement (30), und einen Verbinder (40), wobei die Rückenlehne (10) mit einem ersten Verbindungsabschnitt (111) bereitgestellt ist, die Drehplatte (20) durch den Verbinder (40) mit dem ersten Verbindungsabschnitt (111) verbunden ist, das Verstärkungselement (30) in der Rückenlehne (10) angeordnet ist, und das Verstärkungselement (30) mit dem ersten Verbindungsabschnitt (111) verbunden ist;
**dadurch gekennzeichnet, dass** der Verbinder (40) nacheinander das Verstärkungselement (30), den ersten Verbindungsabschnitt (111) und die Drehplatte (20) durchdringt, um das Verstärkungselement (30), die Rückenlehne (10) und die Drehplatte (20) miteinander zu verbinden.

2. Rückenlehnenverstärkungsstruktur für einen Sicherheitssitz nach Anspruch 1, **dadurch gekennzeichnet, dass** die Rückenlehne (10) einen Hüftstützbereich (11) und einen Rückenstützbereich (12) umfasst; das Verstärkungselement (30) einen ersten Verstärkungsabschnitt (31) umfasst, der mit dem ersten Verbindungsabschnitt (111) verbunden ist, und einen zweiten Verstärkungsabschnitt (32) und einen dritten Verstärkungsabschnitt (33), die sich von zwei Enden des ersten Verstärkungsabschnitts (31) erstrecken; der erste Verstärkungsabschnitt (31) und der dritte Verstärkungsabschnitt (33) sich im Hüftstützbereich (11) befinden; und der zweite Verstärkungsabschnitt (32) sich im Rückenstützbereich (12) befindet.

3. Rückenlehnenverstärkungsstruktur für einen Sicherheitssitz nach Anspruch 2, **dadurch gekennzeichnet, dass** der erste Verstärkungsabschnitt (31) in Richtung der Drehplatte (20) absinkt, der erste Verbindungsabschnitt (111) zur Aufnahme des ersten Verstärkungsabschnitts (31) geeignet ist und die beiden Enden des ersten Verstärkungsabschnitts (31) beide mit dem ersten Verbindungsabschnitt (111) verbunden sind.

4. Rückenlehnenverstärkungsstruktur für einen Sicherheitssitz nach Anspruch 1 oder 3, **dadurch gekennzeichnet, dass** die Drehplatte (20) mit einer Verbindungsaussparung (211) bereitgestellt ist, die Verbindungsaussparung (211) in Richtung des ersten Verbindungsabschnitts (111) hervorsteht und die Verbindungsaussparung (211) zur Aufnahme eines Endes des Verbinders (40) geeignet ist.

5. Rückenlehnenverstärkungsstruktur für einen Sicherheitssitz nach Anspruch 1, **dadurch gekennzeichnet, dass** das Verstärkungselement (30) eine erste Platte (310) umfasst, die angepasst ist, um in die Rückenlehne (10) eingesetzt zu werden, und eine zweite Platte (311), die sich von einer Seite der ersten Platte (310) erstreckt, und die zweite Platte (311) angepasst ist, um mit dem ersten Verbindungsabschnitt (111) verbunden zu sein.

6. Rückenlehnenverstärkungsstruktur für einen Sicherheitssitz nach Anspruch 5, **dadurch gekennzeichnet, dass** eine linke Seite und eine rechte Seite der Rückenlehne (10) jeweils mit Montageaussparungen (13) zur Montage der Verstärkungselemente (30) bereitgestellt sind, und ein Paar Verstärkungselemente (30) angeordnet, und symmetrisch in den Montageaussparungen (13) montiert sind.

7. Rückenlehnenverstärkungsstruktur für einen Sicherheitssitz nach Anspruch 6, **dadurch gekennzeichnet, dass** jede erste Platte (310) mit zwei zweiten Platten (311) bereitgestellt ist, das Verstärkungselement (30) mit insgesamt vier zweiten Platten (311) bereitgestellt ist und jede zweite Platte (311) angepasst ist, um zwei Verbinder (40) zu verbinden.

8. Rückenlehnenverstärkungsstruktur für einen Sicherheitssitz nach Anspruch 1, **dadurch gekennzeichnet, dass** das Verstärkungselement (30) Eisenblech ist und der Verbinder (40) eine Schraube und eine Mutter umfasst.

9. Sicherheitssitz, **dadurch gekennzeichnet, dass** die Rückenlehnenverstärkungsstruktur für einen Sicherheitssitz nach einem der Ansprüche 1-8 verwendet wird.

## Revendications

1. Structure de renfort de dossier pour siège de sécurité, la structure de renfort de dossier comprenant : un dossier (10), une plaque rotative (20), un organe de renfort (30) et un raccord (40), dans lequel le dossier (10) est doté d'une première partie de liaison (111), la plaque rotative (20) est reliée à la première partie de liaison (111) par l'intermédiaire du raccord (40), l'organe de renfort (30) est agencé dans le dossier (10), et l'organe de renfort (30) est relié à la première partie de liaison (111) ;
**caractérisée en ce que** le raccord (40) pénètre séquentiellement l'organe de renfort (30), la première partie de liaison (111) et la plaque rotative (20) pour relier l'organe de renfort (30), le dossier (10) et la plaque rotative (20) entre eux.

2. Structure de renfort de dossier pour siège de sécurité selon la revendication 1, **caractérisée en ce que** le dossier (10) comprend une zone de soutien de hanche (11) et une zone de soutien dorsal (12) ; l'organe de renfort (30) comprend une première partie de renfort (31) reliée à la première partie de liaison (111), ainsi qu'une deuxième partie de renfort (32) et une troisième partie de renfort (33) qui s'étendent à partir de deux extrémités de la première partie de renfort (31) ; la première partie de renfort (31) et la troisième partie de renfort (33) sont situées dans la zone de soutien de hanche (11) ; et la deuxième partie de renfort (32) est située dans la zone de soutien dorsal (12).

3. Structure de renfort de dossier pour siège de sécurité selon la revendication 2, **caractérisée en ce que** la première partie de renfort (31) s'enfonce vers la plaque rotative (20), la première partie de liaison (111) est appropriée pour loger la première partie de renfort (31), et les deux extrémités de la première partie de renfort (31) sont toutes deux reliées à la première partie de liaison (111).

4. Structure de renfort de dossier pour siège de sécurité selon la revendication 1 ou 3, **caractérisée en ce que** la plaque rotative (20) est dotée d'un évidement de liaison (211), l'évidement de liaison (211) fait saillie vers la première partie de liaison (111), et l'évidement de liaison (211) est approprié pour loger une extrémité du raccord (40).

5. Structure de renfort de dossier pour siège de sécurité selon la revendication 1, **caractérisée en ce que** l'organe de renfort (30) comprend une première plaque (310) conçue pour être insérée dans le dossier (10) et une seconde plaque (311) s'étendant d'un côté de la première plaque (310), et la seconde plaque (311) est conçue pour être reliée à la première partie de liaison (111).

6. Structure de renfort de dossier pour siège de sécurité selon la revendication 5, **caractérisée en ce qu'**un côté gauche et un côté droit du dossier (10) sont respectivement dotés d'évidements de montage (13) pour le montage des organes de renfort (30), et une paire d'organes de renfort (30) sont agencés et sont montés symétriquement dans les évidements de montage (13).

7. Structure de renfort de dossier pour siège de sécurité selon la revendication 6, **caractérisée en ce que** chaque première plaque (310) est dotée de deux secondes plaques (311), l'organe de renfort (30) est doté de quatre secondes plaques (311) au total, et chaque seconde plaque (311) est conçue pour être reliée à deux raccords (40).

8. Structure de renfort de dossier pour siège de sécurité selon la revendication 1, **caractérisée en ce que** l'organe de renfort (30) est en tôle, et le raccord (40) comporte un boulon et un écrou.

9. Siège de sécurité, **caractérisé en ce que** la structure de renfort de dossier pour siège de sécurité selon l'une quelconque des revendications 1 à 8 est utilisée.
